# EUROPÄISCHE PATENTSCHRIFT

(11) **EP 3 119 494 B1**
(45) Veröffentlichungstag und Bekanntmachung des Hinweises auf die Patenterteilung: **03.07.2019**
(21) Anmeldenummer: 15717627.2
(22) Anmeldetag: 12.03.2015
(51) Int. Cl.: B01D 39/08, B01D 39/16, A01C 1/04, C02F 1/28, C02F 1/68, C02F 3/10, C02F 101/30

(54) **WIRKSTOFFTRÄGER**
ACTIVE SUBSTANCE CARRIER
SUPPORT DE SUBSTANCES ACTIVES

(30) Priorität: 17.03.2014 DE 202014101190 U
(43) Veröffentlichungstag der Anmeldung: 25.01.2017
(73) Patentinhaber: B+M Textil GmbH & Co. KG, 09465 Sehmatal-Cranzahl (DE); Weisel, Niklas Andreas Wilm, 09456 Annaberg-Buchholz (DE)
(72) Erfinder: WEISEL, Niklas Andreas Wilm, 09456 Annaberg-Buchholz (DE)
(74) Vertreter: Steiniger, Carmen
(86) Internationale Anmeldenummer: PCT/IB2015/051803
(87) Internationale Veröffentlichungsnummer: WO 2015/140672

(56) Entgegenhaltungen:
- WO-A1-2011/133186
- DE-A1- 3 804 356
- DE-A1- 19 512 965
- DE-B4- 10 343 743
- US-A- 4 822 579
- US-A1- 2013 167 436

## Beschreibung

Die vorliegende Erfindung betrifft einen Wirkstoffträger zum Positionieren von Wirkstoffen in einem Medium.

Für Prozesse zur Reduktion oder Reaktion von Schadstoffen und/oder Reaktionsprodukten und/oder Reaktionsedukten werden in heterogenen Kontaktprozessen zum Beispiel in Fest-/Flüssig-Reaktionen Wirkstoffe verwendet, die auf einem Wirkstoffträger fixiert sind und/oder in denen der Feststoff selber mit dem spezifischen Stoff reagiert. Dabei spielen Stofftransportprozesse innerhalb des Feststoffs eine essentielle Rolle. Die Zugänglichkeit zur Oberfläche des Wirkstoffträgers, welche überwiegend in Porenkanälen im Inneren des Feststoffs ausgebildet ist, bestimmt häufig die Prozesseffizienz. In vielen technischen Prozessen ist es schwierig, den Feststoff mit dem Medium, in dem sich der Ziel- oder Schadstoff befindet, in Kontakt zu bringen. Durch den großen Porenraum sind die Feststoffe häufig sehr leicht und schwimmen auf dem flüssigen Medium, wodurch nur ein Bruchteil der Feststoffoberfläche mit der Flüssigkeit in Kontakt kommt und für den Stofftransport nur eine geringe Kontaktoberfläche zur Verfügung steht. Ein anderes häufiges Problem z. B. bei der Verwendung von Aktivkohle oder Bornitrid ist, dass der Feststoff und die Flüssigkeit sich gegenseitig abstoßen, z. B. bei einer hydrophoben Oberfläche in einem wässrigen Medium.

In solchen Fällen werden dann chemische Produkte zur Dispersion feiner Feststoffpartikel in dem Medium angewandt. Die Trennung von dispergierten Feststoffen aus dem Medium wird dann erneut z. B. mit chemischen Koagulanten erwirkt. Die Abtrennung und Entsorgung dieser Stoffe erfolgt dann mechanisch über Filter.

Hier setzt die vorgestellte Erfindung an.

Für die Abwasserreinigung und Wasseraufbereitung existieren mechanische, chemische sowie biologische Verfahren, welche in dafür vorgesehenen Reaktoren ablaufen. Je nach Anwendung kommen Kontaktschlammreaktoren, UASB(upflow anaerobic sludge blanket)-Reaktoren, EGSB(expanded granular sludge bed)-Reaktoren, Festbettreaktoren oder Fließbettreaktoren zum Einsatz. Während bei Festbettreaktoren die Mikroorganismen an ortsfesten Trägermaterialien vorgesehen sind, haften sie bei Fließbettreaktoren an frei beweglichen kleinen Trägermaterialien. Als Trägermaterialien dienen bei Festbettreaktoren in vielen Anwendungen textile Materialien. Bei UASB-Reaktoren kommt ein Schlammbett aus anaeroben Bakterien mit einer Granulatstruktur zum Einsatz. EGSB-Reaktoren sind Hochleistungsschlammbettreaktoren, in denen sich anaerobe Bakterien zu Pellets zusammenballen.

In der Druckschrift DE 41 25 319 C1 ist die Verwendung eines textilen Trägermaterials für die Besiedelung mit Mikroorganismen oder katalytischen Materialien für die aerobe oder anaerobe Abwassereinigung der Festbrettvariante offenbart. Das textile Material ist eine textile Breitware, auf der nebeneinander angeordnete und miteinander verbundene Bewuchsstreifen bzw. Streifen aus katalytischem Material vorgesehen sind. Zwischen den Streifen können stabilisierende Abstandsstreifen vorgesehen sein. Die einzelnen textilen Bandstreifen weisen an einem Ende Ösen zur obigen Befestigung auf. Das untere Ende wird mit Gewichten beschwert oder durch Gewichte befestigt.

Eine Beschwerung durch Gewichte eines textilen, für die Besiedelung mit Mikroorganismen dienenden oder als katalytisches Material für die aerobe oder anaerobe Abwasserreinigung Trägermaterials ist auch in der Druckschrift DE 197 30 839 C2 beschrieben. Das Trägermaterial wird in einen Behälter eingehängt, welcher mit zu behandelndem Abwasser befüllt wird. Das textile Material besteht aus nebeneinander angeordneten, streifen- oder kordelförmigen Besiedelungsstreifen, wobei obere Ösen zur Befestigung vorgesehen sind. Das textile Material kann um ein Traggestell herum gelegt sein, wobei zusätzliche Beschwerungs- und Haltestangen eingefügt sein können.

Zur biologischen Behandlung belasteter, insbesondere ölbelasteter Abwässer ist aus der Druckschrift DE 195 12 965 A1 ein Bioreaktor bekannt, wobei in einem Reaktorbehälter Trägerelemente für Mikroorganismen mit unterhalb der Trägerelemente angeordneten Belüftungsöffnungen vorgesehen sind. Dabei sind die Trägerelemente strangförmig als Netzschläuche ausgebildet und an einer Halterung gegeneinander frei beweglich im Reaktorbehälter aufgehängt. In den Netzschläuchen ist eine Füllung vorgesehen, welche eine große Oberfläche als Träger für Mikroorganismen aufweist.

In der Druckschrift EP 0 164 508 B1 wird ein Abwasserbehandlungsgerät vorgeschlagen, bei welchem schnurartiges Kontaktmaterial vertikal in einen Behandlungstank eingehängt ist. Die einzelnen bandförmigen Kontaktmaterialien bestehen aus einem textilen Gewebe und sind einzeln an dem Behandlungstank befestigt. In die Mitte des Behandlungstanks ist eine Zirkulationsröhre eingesetzt, welche in ihrem Mittelbereich Luft einsaugt, die das zu behandelnde Wasser innerhalb des Behandlungstanks zwangszirkulieren lässt.

In der Druckschrift DE 103 43 743 B4 ist ein Festbett für die aerobe oder anaerobe Abwasserreinigung beschrieben, das ein selbsttragendes Rahmengestell aufweist, in dem Trägergarne, Seile, einzelne monofile Fasern aus nicht verrottbaren Material, textile Streifen oder Kordeln oder eine Breitware zur Besiedelung mit Mikroorganismen oder aus katalytischem Material angeordnet sind. Die strang- und/oder streifenförmigen Besiedelungsstreifen können durch flexible oder starre Verbindungselemente quer zur Vorhangrichtung miteinander verbunden sein. Auf diese Weise kann die gesamte Anordnung in Schwingung versetzt werden.

In dem Festbett ist mindestens ein Rohr oder Schlauch mit radialen Austrittsöffnungen senkrecht angeordnet, wobei oben am Rohr oder Schlauch mindestens ein Anschluss für die Einleitung gasförmiger und/oder flüssiger Additive vorgesehen ist. Der Schlauch kann ein textiler Gewebeschlauch mit Maschenöffnungen oder speziell eingewirkten Öffnungen sein.

Die Druckschrift US 2013/0167436 A1 beschreibt einen Pflanzstrick, welcher eine Schlauchhülle aufweist, in welcher voneinander beabstandete Samenbereiche vorgesehen sind. Jeder Samenbereich umfasst einen Samen und einen den Samen umgebenden aus Erde und Dünger ausgebildeten kohäsiven Körper. In Bereichen zwischen den Samenbereichen sind Einschnürungen der Schlauchhülle vorgesehen, welche die Samenbereiche in der gewünschten Position halten und durch Nähen oder Kleben ausgebildet sind.

Es ist die Aufgabe der vorliegenden Erfindung, einen Wirkstoffträger vorzuschlagen, weicher eine große Wirkoberfläche für die durch den Wirkstoffträger aufgenommenen oder aufnehmbaren Wirkstoffe zur Verfügung stellt sowie einfach und variabel in eine Prozessanlage integrierbar und in dieser bewegbar ist.

Die Aufgabe wird erfindungsgemäß durch einen Wirkstoffträger zum Positionieren von Wirkstoffen in einem Medium, beispielsweise in einem fluiden Medium, gemäß Anspruch 1 gelöst, welcher wenigstens eine aus einem Schlauchtextil ausgebildete Kette oder wenigstens ein aus einem Schlauchtextil ausgebildetes Band aufweist, wobei in das Schlauchtextil wenigstens ein Wirkstoffträgerkörper eingearbeitet ist und wobei das Schlauchtextil an wenigstens einer Wirkstelle durch den wenigstens einen Wirkstoffträgerkörper derart gedehnt ist, dass wenigstens ein Teil der Oberfläche des Wirkstoffträgerkörpers für eine Wechselwirkung mit dem den Wirkstoffträger umgebenden Medium offen ist.

Erfindungsgemäß besteht der Wirkstoffträger aus einem Schlauchtextil, wobei der Wirkstoffträger in Form wenigstens einer Kette oder wenigstens eines Bandes ausgebildet ist. Durch diesen Aufbau weist das Schlauchtextil des erfindungsgemäßen Wirkstoffträgers eine hohe Flexibilität auf, sodass es beispielsweise geeignet in dem umgebenden Medium bewegt werden kann.

Das Schlauchtextil kann auf einfache technologische, nicht kostenintensive Weise hergestellt werden. Die Fasern des Schlauchtextils können so gewählt werden, dass eine geforderte Beständigkeit gegen zerstörende Bestandteile des mit dem Wirkstoffträgerkörper als Funktionsträger in Kontakt stehenden Mediums, wie z. B. Abwasser, realisiert werden kann.

Der wenigstens eine Wirkstoffträgerkörper wird an seiner Position in dem Schlauchtextil durch das dehnbare Material des Schlauchtextils geklemmt gehalten. An den an die Position des wenigstens einen Wirkstoffträgers angrenzenden Bereiche des Schlauchtextils ist dieses ungedehnt. An diesen ungedehnten Stellen hat das Schlauchtextil einen geringeren Durchmesser als an den gedehnten Stellen. Ist der Wirkstoffträger in Form einer Kette ausgebildet, sind die Wirkstoffträgerkörper vorzugsweise in regelmäßigen Abständen in der Kette aufgereiht.

Bei der vorliegenden Erfindung sind vorzugsweise an voneinander beabstandeten Wirkstellen Wirkstoffträgerkörper in das Schlauchtextil eingearbeitet. Die eingearbeiteten Wirkstoffträgerkörper werden hierdurch in dem Schlauchtextil gehalten. Die Wirkstoffträgerkörper lassen sich während des Herstellungsprozesses des Schlauchtextils in einem definierten Abstand zueinander in das Schlauchtextil einfügen.

In das Schlauchtextil können beispielsweise kombinierbare Wirkstoffträgerkörper eingearbeitet werden. Auf diese Weise lässt sich eine Multifunktionalität des erfindungsgemäßen Wirkstoffträgers realisieren. Ferner ist es möglich, Wirkstoffträgerkörper in dem Schlauchtextil auszuwechseln oder bei Bedarf zu erneuern, wodurch das Schlauchtextil mehrmals wiederverwendbar bzw. recycelbar ist.

Erfindungsgemäß wird das Schlauchtextil an den Wirkstellen durch den wenigstens einen eingearbeiteten Wirkstoffträgerkörper derart gedehnt, dass wenigstens ein Teil der Oberfläche der Wirkstoffträgerkörper für die Wechselwirkung des Wirkstoffträgers mit dem umgebenden Medium offen ist. Durch die textile Struktur des Schlauchtextils kann das Schlauchtextil enorm gedehnt, aber auch wieder gestrafft werden. Bei der Dehnung werden beispielsweise einzelne Fäden des Schlauchtextils derart auseinander gezogen, sodass wenigstens eine Öffnung des Schlauchtextils entsteht, die einen Kontakt zwischen dem in das Schlauchtextil Wirkstoff und dem umgebenden Medium ermöglicht. Über diese Öffnung kann somit eine optimale Wechselwirkung der Wirkstoffträgerkörper mit dem den Wirkstoffträger umgebenden Medium erfolgen. Durch die elastische Dehnung erfährt der Wirkstoffträgerkörper in dem Schlauchtextil eine zusätzliche Fixierung an seiner vorgesehenen Position.

In einer zweckdienlichen Ausgestaltung des erfindungsgemäßen Wirkstoffträgerkörpers ist das Schlauchtextil gestrickt, gewirkt, gewebt, geflochten, gesponnen und/oder eine Vliesstruktur. Das Schlauchtextil lässt sich dadurch relativ einfach und kostengünstig herstellen, wobei die Wirkstoffträgerkörper sich auf einfache Weise während des Herstellungsprozesses des Schlauchtextils einarbeiten und/oder auswechseln lassen. Zur Herstellung des Schlauchtextils können beispielsweise abwasserbeständige, elastische Fasermaterialien verarbeitet werden, die eine erforderliche Dehnung des Schlauchtextils ermöglichen und die Wirkstoffträgerkörper ausreichend, ohne Verwendung eines zusätzlichen Trägermaterials an bestimmten Positionen des Schlauchtextils fixieren. Optional ist es vorstellbar, dass das Schlauchtextil ein Stahlgewebe ist, wodurch das Schlauchtextil beispielsweise ein eine Hängelage begünstigendes Eigengewicht aufweist.

Erfindungsgemäß besteht der wenigstens eine Wirkstoffträgerkörper aus festem und/oder breiigem Material und kann zwar in manchen Ausführungsformen der Erfindung Flüssigkeit aufnehmen, ist aber selbst keine Flüssigkeit und kein Gas.

In verschiedenen Ausführungsformen der vorliegenden Erfindung kann das Schlauchtextil beispielsweise aus Naturdarm- oder Kunstdarmmaterial ausgebildet sein. Dabei kann das Schlauchtextil zum Beispiel in Form eines um den wenigstens einen Wirkstoffträgerkörper gedehnten Netzschlauches ausgebildet sein.

Es hat sich als besonders vorteilhaft erwiesen, wenn die Wirkstoffträgerkörper Pellets und/oder Kugeln und/oder Watte- oder geschäumte Materialien sind, die während des Textilummantelungsprozesses in eine komprimierte kugel- oder zylinderartige Form gebracht werden können. Durch die kugelförmige Ausgestaltung der Wirkstoffträgerkörper können sich diese optimal an die Schlauchstruktur anpassen. Kugelförmige Wirkstoffträgerkörper und relativ weiche Körper, wie beispielsweise Watte- oder geschäumte Materialien, weisen keine Kanten auf, wodurch das Schlauchtextil beschädigt werden könnte. Zudem wird durch eine kugelförmige Ausgestaltung des Schlauchtextils eine maximale Oberfläche bei einem relativ geringen Volumen des Wirkstoffträgerkörpers erreicht, wodurch eine optimale Wechselwirkung des Wirkstoffträgerkörpers mit dem umgebenden Medium realisiert wird. Bei einer Gestaltung der Wirkstoffträgerkörper in Form von Pellets kann das Schlauchtextil zusätzlich in seiner Länge optimal ausgenutzt werden.

Gemäß einer weiteren optionalen Ausgestaltung des erfindungsgemäßen Wirkstoffträgers weist dieser wenigstens einen aus Watte, wie beispielsweise Polyesterwatte, ausgebildeten Wirkstoffträgerkörper auf. Dadurch ist der Wirkstoffträgerkörper sehr gut zur Wasseraufnahme geeignet. Er kann hierdurch beispielsweise zur Aufnahme von Saatgut verwendet werden. Das Saatgut kann hierfür bereits bei der Herstellung des Wirkstoffträgers in den wenigstens einen, aus Watte ausgebildeten Wirkstoffträgerkörper eingearbeitet sein, kann aber auch erst nachträglich von außen, in den wenigstens einen Wirkstoffträgerkörper eingedrückt oder auf andere Weise geeignet eingebracht werden.

Der wenigstens eine, aus Watte ausgebildete Wirkstoffträgerkörper kann aus einem langen Watteband bestehen oder aus einzelnen Wattestücken ausgebildet sein.

Die Watte kann als Katalysatorträger genutzt werden. Dabei kann als Katalysator beispielsweise eine Wasser-Nährstoff-Kombination eingesetzt werden.

Günstigerweise weisen die Wirkstoffträgerkörper Poren auf. Diese Poren können nach Beendigung eines Filterprozesses, in dem der Wirkstoffträger zum Einsatz kommt, weiter geöffnet werden, sodass die Schadstoffe zur Regeneration ausgeschleust werden können. Auf diese Weise kann der Wirkstofffilter kontinuierlich regeneriert werden. Der Wirkstoffträger kann aber ebenfalls als Wirkstoffspender verwendet werden.

Sinnvoll ist es auch, wenn die Wirkstoffträgerkörper Hohlkörper sind. Der Innenraum solcher Wirkstoffträgerkörper kann dabei mit einem zusätzlichen Wirkstoff oder mit anderem Material versehen werden, wobei das Material des Wirkstoffträgerkörpers so gewählt werden kann, dass eine Abgabe des Wirkstoffes beispielsweise nur über dafür vorgesehene Poren des Wirkstoffträgerkörpers erfolgen kann.

In einer geeigneten Ausführungsform der vorliegenden Erfindung weist der Wirkstoffträgerkörper wenigstens ein Filtermaterial und/oder wenigstens ein Katalysatormaterial und/oder wenigstens eine Nährstofflösung und/oder feste Nährstoffe und/oder breiige Nährstoffe und/oder tierische Produkte und/oder tierische Ausscheidungen und/oder pflanzliche Abfälle und/oder kompostiertes Material auf, und/oder ist aus wenigstens einem physikalisch und/oder chemisch reagierenden Stoff ausgebildet oder enthält wenigstens einen physikalisch und/oder chemisch reagierenden Stoff, der mit dem umgebenden Medium interagiert und/oder reagiert. Der Wirkstoffträgerkörper ist dadurch in der Lage, die Schadstoffe des den Wirkstoffträger umgebenden Mediums zu filtern und/oder zu neutralisieren und/oder das Wachstum von biologischen Organismen, welche zum Abbau von Schadstoffen oder CO₂ dienen, zu unterstützen. Hierbei können mehrere verschiedene Funktionskörper und -materialien zum Einsatz kommen, welche auf unterschiedliche Schadstoffe reagieren.

Wenn der wenigstens eine Wirkstoffträgerkörper beispielsweise in Form pflanzlicher Abfallstoffe ausgebildet ist, besteht die Möglichkeit, Insektenlarven und/oder Würmer, die diese pflanzlichen Abfallstoffe fressen, verdauen, durch den Verdauungsvorgang in als Dünger verwendbare Stoffe umwandeln und gleichzeitig durch Massenzunahme Protein generieren, in den Wirkstoffträger einzubinden.

Dabei ist es besonders zweckmäßig, wenn das Filtermaterial oder das Katalysatorträgermaterial ein Material mit sehr großem Oberflächen-Volumen-Verhältnis ist. Als Filtermaterial und/oder Katalysatorträgermaterial eignet sich auch besonders eine poröse polymere oder metallische Schaumstoffstruktur.

Das Filtermaterial und/oder Katalysatorträgermaterial und/oder andere Funktionskörpermaterial kann eine komprimierbare und/oder relaxierbare Porenstruktur aufweisen.

Beispielsweise kann das Filtermaterial und/oder Katalysatorträgermaterial und/oder andere Funktionskörpermaterial aus Aktivkohle und/oder wenigstens einem Zeolith und/oder wenigstens einem Betonit und/oder einem geschäumten Material aus metallischem oder polymerem Grundmaterial und/oder Bornitrid bestehen. Aktivkohle eignet sich besonders durch seine große Oberfläche für die Aufnahme und Filterung von Schadstoffen und ist kostengünstig. Für die vorliegende Erfindung verwendbare Zeolithe kommen einerseits in Natur vor oder können zudem synthetisch hergestellt werden. Je nach Strukturtyp des Zeoliths ergibt sich eine Struktur aus gleichförmigen Poren oder Kanälen, in denen Stoffe relativ gut adsorbiert werden können.

Betonite bestehen aus verschiedenen Tonmaterialien und zeichnen sich durch eine gute Fähigkeit, Wasser zu speichern, und eine vorteilhafte Quellfähigkeit aus, wodurch eine Schadstoffspeicherung im Wirkstoffträgerkörper realisiert werden kann. Schadstoffe des umgebenden Mediums können somit in einer hohen Konzentration in dem Wirkstoffträgerkörper gespeichert werden, wodurch die Schadstoffkonzentration in dem den Wirkstoffträger umgebenden Medium deutlich verringert werden kann.

Metallische und polymere Schäume lassen sich in vielfältige Strukturen bringen und reagieren selbst oder durch eine Beschichtung mit dem umgebenden Medium.

Bornitrid ist superhydrophob mit einer sehr großen spezifischen Oberfläche und eignet sich besonders zur Adsorption von hydrophoben Kohlenwasserstoffen aus wässrigen Medien.

Es hat sich als besonders günstig erwiesen, wenn die Wirkstoffträgerkörper einen im Vergleich zu ihrem Gesamtgewicht schwereren Kern aufweisen oder in das Schlauchtextil zwischen den Wirkstoffträgerkörpern Beschwerungskörper eingearbeitet sind. Die Beschwerungskörper oder der schwere Kern des Wirkstoffträgerkörpers sind besonders dann sinnvoll, wenn das Grundmaterial, aus dem der Wirkstoffträgerkörper ausgebildet ist, ein geringes Eigengewicht aufweist. Dies ist zum Beispiel dann der Fall, wenn das Grundmaterial des Wirkstoffträgerkörpers Aktivkohle ist. Eine Beschwerung des Wirkstoffträgers kann auch erforderlich sein, um eine Schwebelage des Schlauchtextils in dem Medium zu realisieren.

Vorzugsweise können die Beschwerungskörper dabei abwechselnd zu den Wirkstoffträgerkörpern in das Schlauchtextil eingearbeitet werden. Um eine Kernbeschwerung des Wirkstoffträgerkörpers zu realisieren, wird das Innenvolumen des Hohlkörpers des Wirkstoffträgerkörpers genutzt und mit einer Beschwerungsmasse gefüllt. Dadurch geht die zur Verfügung stehende Wirkstoffträgerkörperoberfläche nicht verloren und die hohe Effektivität des Wirkstoffträgers wird nicht beeinflusst.

In einem vorteilhaften Ausführungsbeispiel der vorliegenden Erfindung wird die aus dem Schlauchtextil gebildete Kette oder das aus dem Schlauchtextil ausgebildete Band wellen- oder bogenförmig um Führungssäulen gewunden. Dabei sind die Führungssäulen nebeneinander und im Abstand zueinander gegenüber angeordnet. Die Führungssäulen können dabei eine Rotationsbewegung ausführen, um den Wirkstoffträger in dem Medium horizontal bewegen zu können. Das Schlauchtextil kann dabei so auf Spannung um die Führungssäulen gelegt sein, dass ein Verrutschen des Wirkstoffträgers selbst bei einer Bewegung weitgehend vermieden werden kann. Demzufolge kann eine Bewegung des Wirkstoffträgers in dem Medium, ohne zu den Führungssäulen zusätzlich Befestigungselemente zu benötigen, relativ einfach realisiert werden.

Sinnvoll ist es auch, wenn die Kette oder das Band in ein textiles Flächengebilde eingearbeitet ist. Dadurch lassen sich nicht nur bandartige Wirkstoffträger, sondern auch in beliebigen Abmaßen gestaltete Flächenstrukturen realisieren, in die bereits während eines Strick-, Wirk-, Web-, Flecht-, Spinn- und/oder Vliesherstellungsprozesses Wirkstoffträgerkörper oder andere Elemente eingearbeitet werden können. Das Flächengebilde lässt sich auf eine einfache Weise herstellen und in ein Festbrett einer Prozessanlage variabel integrieren. Durch die Struktur und die Flexibilität des Flächengebildes kann eine optimale Wechselwirkung zwischen den eingearbeiteten Wirkstoffträgerkörpern und dem das Flächengebilde umgebenden Medium erfolgen.

Erfindungsgemäß ist der Wirkstoffträger oder ein Modul, in oder an welchem der Wirkstoffträger vorgesehen ist, mit einer Transportvorrichtung für eine automatische Bewegung des Wirkstoffträgers durch das umgebende Medium gekoppelt. Durch eine Bewegung des Wirkstoffträgers oder eines daraus gebildeten Moduls kann, analog zu dem Verfahren in einem Rührkesselreaktor, der Wirkbereich und damit der Wirkungsgrad der in dem Wirkstoffträger integrierten Wirkstoffträgerkörper wesentlich erhöht werden. Die Bewegung des Wirkstoffträgers erfolgt automatisiert. Insbesondere kann die Bewegung so ausgerichtet werden, dass der Wirkstoffträger beispielsweise im Gegenstromprinzip durch ein fluides Medium geführt wird, wodurch die Effektivität des Filtereffektes verbessert und die Verweilzeit des Fluids im System reduziert werden kann.

Bevorzugte Ausführungsformen der vorliegenden Erfindung, deren Aufbau, Funktion und Vorteile werden im Folgenden anhand von Figuren näher erläutert, wobei:
- Figur 1: schematisch eine mögliche Ausgestaltung des erfindungsgemäßen Wirkstoffträgers in Kettenform in einer Seitenansicht zeigt;
- Figur 2: schematisch einen Ausschnitt einer Ausführungsvariante des erfindungsgemäßen Wirkstoffträgers in einer geflochtenen Ausführung des Schlauchtextils in einer Seitenansicht zeigt; und
- Figur 3: schematisch einen Ausschnitt einer weiteren Ausführungsforme des erfindungsgemäßen Wirkstoffträgers mit einer gestrickten Ausführung des Schlauchtextils in einer Seitenansicht zeigt.

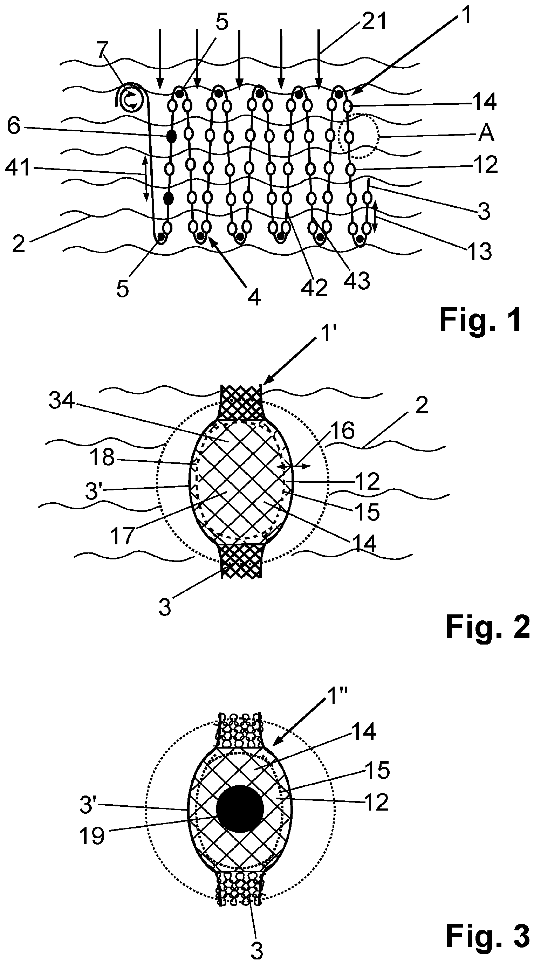

Figur 1 zeigt schematisch einen erfindungsgemäßen Wirkstoffträger 1, welcher ein Schlauchtextil 3 aufweist. Das Schlauchtextil 3 weist in definierten Abständen 13 eingearbeitete Wirkstoffträgerkörper 14 auf, wobei das Schlauchtextil 3 mit den eingearbeiteten Wirkstoffträgerkörpern 14 eine Kette 4 oder ein nicht dargestelltes Band ausbildet. Wenn die Wirkstoffträgerkörper 14 aufgrund ihrer Struktur und/oder ihres Materials ein relativ geringes Eigengewicht aufweisen, können abwechselnd zu den Wirkstoffträgerkörpern 14 Beschwerungskörper 6 in das Schlauchtextil 3 eingearbeitet sein. Dadurch kann der Wirkstoffträger 1 in einer Schwebelage gehalten werden.

Die Kette 4 ist in der in Figur 1 dargestellten Ausführungsvariante wellen- oder bogenförmig um Führungssäulen 5 gelegt, wobei die Kette 4 eine solche Zugspannung aufweist, dass ein Verrutschen an den Führungssäulen 5 des Schlauchtextils 3 vermieden werden kann. Zudem kann eine Berührung benachbarter Kettenabschnitte 42, 43 verhindert werden, die zu einer Beschädigung durch Abrieb des Schlauchtextils 3 führen könnte. Zusätzliche Befestigungselemente können zwar vorgesehen sein, sind aber nicht unbedingt erforderlich.

Dadurch dass sich die Führungssäulen 5 relativ einfach und variabel in die Prozessanlage integrieren und wieder entfernen lassen, ist der Wirkstoffträger 1 besonders für Spezialanwendungen geeignet. Die Kette 4 oder das nicht dargestellte Band kann gut durch ein umgebendes Medium 2 geführt werden, wodurch sich eine hohe Effektivität der Filterung ergibt.

Der erfindungsgemäße Wirkstoffträger 1 ist in einem fluiden Medium 2 vorgesehen, welches eine Strömung 21 aufweist. Dadurch ergibt sich ein begünstigter Stofftransport zwischen dem Funktionsmaterial des bzw. der Wirkstoffträgerkörper(s) 14 und dem umgebenden des Wirkstoffträgers 1. Ferner ist in der Ausführungsform von Figur 1 eine Transportvorrichtung 7 vorgesehen, mit der der Wirkstoffträger 1 in eine automatische Bewegung versetzt werden kann. Dabei überträgt die Transportvorrichtung 7 beispielsweise eine Drehbewegung auf eine an der Transportvorrichtung 7 anliegende Kette 4 und bewegt die Kette 4 in Bewegungsrichtungen 41. Es ist dabei möglich, dass sich die Kette gegenströmig zu der Strömung 21 des fluiden Mediums 2 bewegt, wodurch die Effektivität der Interaktion an der Grenzfläche zwischen Wirkstoffmaterial, wie den Wirkstoffträgerkörpern 14, und dem fluiden Medium 2 zusätzlich erhöht wird.

Figur 2 zeigt schematisch einen Ausschnitt A eines erfindungsgemäßen Wirkstoffträgers 1'. Dabei bezeichnen gleiche Bezugszeichen wie in Figur 1 gleiche Komponenten, wobei hiermit auf die obige Beschreibung dieser Komponenten verwiesen wird. Die Beschreibung dieser Komponenten, die oben bereits bezüglich Figur 1 erfolgte, gilt im Folgenden auch für entsprechende Komponenten von Figur 3.

In der Ausführungsform von Figur 2 ist das Schlauchtextil 3 eine Flechtware. An der Position, an der der Wirkstoffträgerkörper 14 ohne ein zusätzliches Trägermaterial eingearbeitet ist, ist das Schlauchtextil 3 derart gedehnt, dass es den Wirkstoffträgerkörper 14 in seiner Position im Schlauchtextil 3 fixiert. Bei der Dehnung des Schlauchtextils 3 entsteht eine Öffnung 34 des gedehnten Schlauchtextils 3', wodurch der Wirkstoffträgerkörper 14 direkten Kontakt zum fluiden Medium 2 bekommt und mit diesem in Wechselwirkung 16 treten kann.

Der Wirkstoffträgerkörper 14 kann als Pellet 17 oder als nicht dargestellte Kugel ausgeführt oder eine komprimierte Schaumstoff- oder Wattestruktur aufweisen oder ein Hohlkörper sein. Optional ist es vorgesehen, dass als Wirkstoffträgerkörper 14 verwendete Pellets 17 oder Kugeln oder Schaumstoff- oder Wattestrukturen Poren 18 aufweisen. Nach einem Reaktionsprozess könne solche Poren aufgeweitet werden, um die gespeicherten Schadstoffe oder abgetrennten Substanzen abgeben zu können. Auf diese Weise ist eine kontinuierliche Regeneration des Wirkstoffträgers 1' möglich.

Durch die Textilverarbeitung, durch welche der oder die Wirkstoffträgerkörper 14 in das Schlauchtextil 3 eingearbeitet werden, kann die Größe der Poren bestimmt oder mitbestimmt werden.

An den Wirkstellen 12 des Wirkstoffträgerkörpers 14 erfolgt eine Wechselwirkung 16 des Wirkstoffträgerkörpers 14 mit dem fluiden Medium 2. Der Wirkstoffträgerkörper 14 kann durch unmittelbaren Kontakt zu dem fluiden Medium 2 mit diesem auf intensive Weise reagieren. Ein Strömungswiderstand und/oder eine Diffusionsbarriere ist durch den direkten Kontakt von Wirkstoffträgerkörper 14 und fluidem Medium 2 minimiert. Die durch das Schlauchtextil 3 realisierbare grobmaschige Textilummantelung des Wirkstoffträgerkörpers 14 bzw. der Wirkstoffträgerkörper 14 des Wirkstoffträgers 1, 1' erlaubt beispielsweise einen hohen Stofftransport in die Poren bzw. an die Oberfläche des Wirkstoffträgerkörpers 14.

Figur 3 zeigt schematisch einen Ausschnitt einer weiteren Variante des erfindungsgemäßen Wirkstoffträgers 1", bei dem das Schlauchtextil 3 eine Strickware ist. In die Strickware ist ohne ein zusätzliches Trägermaterial ein Wirkstoffträgerkörper 14 eingearbeitet, welcher das Schlauchtextil 3 dehnt. Das gedehnte Schlauchtextil 3' bietet dem Wirkstoffträgerkörper 14 aufgrund der Elastizität eine ausreichende Stabilität, um den Wirkstoffträgerkörper 14 an seiner Position in dem gedehnten Schlauchtextil 3' zu fixieren.

Der Wirkstoffträgerkörper 14 kann als ein Hohlkörper ausgebildet sein. Das dadurch existierende Innenvolumen des Wirkstoffträgerkörpers 14 kann mit einem Beschwerungskern 19 versehen sein. Eine Kernbeschwerung ist hier sinnvoll, da der hier verwendete Wirkstoffträgerkörper 14 aufgrund seiner Struktur ein geringes Eigengewicht aufweist und durch die Beschwerung eine Schwebelage des Wirkstoffträgers 1, 1' oder 1" erzielt werden kann. Bei einer Innenkernvariante wird eine Minimierung der Oberfläche 15 des Wirkstoffträgers 14 vermieden, wodurch der Filtereffekt nicht beeinträchtigt wird.

## Patentansprüche

1. Wirkstoffträger (1) zum Positionieren von Wirkstoffen in einem Medium (2), wobei der Wirkstoffträger (1) wenigstens eine aus einem Schlauchtextil (3, 3') ausgebildete Kette (4) oder wenigstens ein aus einem Schlauchtextil (3) ausgebildetes Band aufweist,
**dadurch gekennzeichnet,**
**dass** in das Schlauchtextil (3, 3') wenigstens ein Wirkstoffträgerkörper (14) ohne ein zusätzliches Trägermaterial eingearbeitet ist, wobei das Schlauchtextil (3, 3') an wenigstens einer Wirkstelle (12) durch den wenigstens einen Wirkstoffträgerkörper (14) derart gedehnt ist, dass wenigstens ein Teil der Oberfläche (15) des Wirkstoffträgerkörpers (14) für eine Wechselwirkung (16) mit dem den Wirkstoffträger (1) umgebenden Medium (2) offen ist und wobei der Wirkstoffträger (1) oder ein Modul, in oder an welchem der Wirkstoffträger (1) vorgesehen ist, mit einer für eine automatische Bewegung des Wirkstoffträgers (1) durch das Medium (2) ausgelegten Transporteinrichtung (7) gekoppelt ist, wobei der Wirkstoffträger (1) durch die Transportvorrichtung (7) in eine automatische bewegung versetzt wird.

2. Wirkstoffträger nach Anspruch 1, **dadurch gekennzeichnet, dass** mehrere Wirkstoffträgerkörper (14) an voneinander beabstandeten Wirkstellen (12) in das Schlauchtextil (3, 3') eingearbeitet sind.

3. Wirkstoffträger nach Anspruch 1 oder 2, **dadurch gekennzeichnet, dass** das Schlauchtextil (3, 3') gestrickt, gewirkt, gewebt, geflochten, gesponnen und/oder eine Vliesstruktur ist.

4. Wirkstoffträger nach Anspruch 3, **dadurch gekennzeichnet, dass** das Schlauchtextil (3, 3') aus Naturdarm- oder Kunstdarmmaterial ausgebildet ist.

5. Wirkstoffträger nach wenigstens einem der vorhergehenden Ansprüche, **dadurch gekennzeichnet, dass** die Wirkstoffträgerkörper (14) Pellets und/oder Kugeln (17) und/oder Watte- oder geschäumte Körper sind, die während des Textilummantelungsprozesses in eine komprimierte kugel- oder zylinderartige Form bringbar sind.

6. Wirkstoffträger nach wenigstens einem der vorhergehenden Ansprüche, **dadurch gekennzeichnet, dass** der wenigstens eine Wirkstoffträgerkörper (14) Poren (18) aufweist.

7. Wirkstoffträger nach wenigstens einem der vorhergehenden Ansprüche, **dadurch gekennzeichnet, dass** der wenigstens eine Wirkstoffträgerkörper (14) ein Hohlkörper ist.

8. Wirkstoffträger nach wenigstens einem der vorhergehenden Ansprüche, **dadurch gekennzeichnet, dass** der wenigstens eine Wirkstoffträgerkörper (14) wenigstens ein Filtermaterial und/oder wenigstens ein Katalysatorträgermaterial und/oder wenigstens eine Nährstofflösung und/oder feste Nährstoffe und/oder breiige Nährstoffe und/oder tierische Produkte und/oder tierische Ausscheidungen und/oder pflanzliche Abfälle und/oder kompostiertes Material aufweist, und/oder aus wenigstens einem physikalisch und/oder chemisch reagierenden Stoff ausgebildet ist und/oder wenigstens einen physikalisch und/oder chemisch reagierenden Stoff enthält, der mit dem umgebenden Medium (2) interagiert und/oder reagiert.

9. Wirkstoffträger nach Anspruch 8, **dadurch gekennzeichnet, dass** in den Wirkstoffträger (1) Insektenlarven und/oder Würmer aufgenommen oder aufnehmbar sind.

10. Wirkstoffträger nach Anspruch 8, **dadurch gekennzeichnet, dass** das Filtermaterial und/oder das Katalysatorträgermaterial eine poröse Schaumstoffstruktur aufweist.

11. Wirkstoffträger nach Anspruch 8 oder 10, **dadurch gekennzeichnet, dass** das Filtermaterial und/oder das Katalysatorträgermaterial komprimierbare und/oder relaxierbare Poren aufweist.

12. Wirkstoffträger nach wenigstens einem der vorhergehenden Ansprüche, **dadurch gekennzeichnet, dass** im Innenvolumen des Wirkstoffträgerkörpers (14) ein Beschwerungskern (19) vorgesehen ist oder in das Schlauchtextil (3, 3') zwischen den Wirkstoffträgerkörpern (14) Beschwerungskörper (6) eingearbeitet sind.

13. Wirkstoffträger nach wenigstens einem der vorhergehenden Ansprüche, **dadurch gekennzeichnet, dass** die Kette (4) oder das Band wellen- oder bogenförmig um eine Anzahl im Abstand nebeneinander und einander im Abstand gegenüber angeordneter Führungssäulen (5) gewunden ist.

14. Wirkstoffträger nach wenigstens einem der vorhergehenden Ansprüche, **dadurch gekennzeichnet, dass** die Kette (4) oder das Band in ein textiles Flächengebilde eingearbeitet ist.

## Claims

1. Active substance carrier (1) for positioning active substances in a medium (2), wherein the active substance carrier (1) comprises at least one chain (4) made of a tubular textile (3, 3') or at least one strip made of a tubular textile (3),
**characterized in that**
at least one active substance carrier body (14) is incorporated into the tubular textile (3, 3') without an additional carrier material, wherein the tubular textile (3, 3') is expanded on at least one active point (12) by the at least one active substance carrier body (14) in such a way that at least a part of the surface (15) of the active substance carrier body (14) is open for an exchange process (16) with the medium (2) surrounding the active substance carrier (1) and wherein the active substance carrier (1) or a module, in or on which the active substance carrier (1) is provided, is coupled with a transport device (7) designed for an automatic movement of the active substance carrier (1) through the medium (2), wherein the active substance carrier (1) is put into an automatic motion by the transport device (7).

2. Active substance carrier according to claim 1, **characterized in that** several active substance carrier bodies (14) are incorporated into the tubular textile (3, 3') on several spaced apart active points (12).

3. Active substance carrier according to claim 1 or 2, **characterized in that** the tubular textile (3, 3') is knitted, wrought, woven, braided, spun and/or a nonwoven structure.

4. Active substance carrier according to claim 3, **characterized in that** the tubular textile (3, 3') is formed of a natural casing or artificial casing material.

5. Active substance carrier according to at least one of the preceding claims, **characterized in that** the active substance carrier bodies (14) are pellets and/or balls (17) and/or cotton or foamed bodies, which can be brought into a compressed ball-shaped or cylindrical form during the textile sheathing process.

6. Active substance carrier according to at least one of the preceding claims, **characterized in that** the at least one active substance carrier body (14) comprises pores (18).

7. Active substance carrier according to at least one of the preceding claims, **characterized in that** the at least one active substance carrier body (14) is a hollow body.

8. Active substance carrier according to at least one of the preceding claims, **characterized in that** the at least one active substance carrier body (14) comprises at least one filter material and/or at least one catalyst carrier material and/or at least one nutrient solution and/or solid nutrients and/or pulpy nutrients and/or animal products and/or animal excretions and/or vegetable waste and/or composted material and/or is formed of at least one physically and/or chemically reacting substance and/or contains at least one physically and/or chemically reacting substance, which interacts and/or reacts with the surrounding medium (2).

9. Active substance carrier according to claim 8, **characterized in that** insect larvae and/or worms are included or can be included in the active substance carrier (1).

10. Active substance carrier according to claim 8, **characterized in that** the filter material and/or the catalyst carrier material comprises a porous foam structure.

11. Active substance carrier according to claim 8 or 10, **characterized in that** the filter material and/or the catalyst carrier material comprises compressible and/or relaxable pores.

12. Active substance carrier according to at least one of the preceding claims, **characterized in that** a weighting core (19) is provided in the internal volume of the active substance carrier body (14) or weighting bodies (6) are incorporated between the active substance carrier bodies (14) in the tubular textile (3, 3').

13. Active substance carrier according to at least one of the preceding claims, **characterized in that** the chain (4) or the strip is wound wave- or arch-shaped around a number of guide columns (5) arranged next to one another at a distance and opposite to one another at a distance.

14. Active substance carrier according to at least one of the preceding claims, **characterized in that** the chain (4) or the strip is incorporated into a textile sheet material.

## Revendications

1. Support de substances actives (1) servant à positionner des substances actives dans un milieu (2), le support de substances actives (1) comprenant au moins une chaîne (4) formée d'un tuyau textile (3, 3') ou au moins une bande formée d'un tuyau textile (3),
**caractérisé en ce que**
au moins un corps de support de substances actives (14) est incorporé dans le tuyau textile (3, 3') sans un matériau support additionnel, le tuyau textile (3, 3') étant étiré au niveau d'au moins un site d'action (12) par l'au moins un corps de support de substances actives (14) de telle sorte qu'au moins une partie de la surface (15) du corps de support de substances actives (14) est ouverte en vue d'une interaction (16) avec le milieu (2) environnant le support de substances actives (1), et le support de substances actives (1) ou un module, où le support de substances actives (1) est prévu, étant couplé avec un dispositif de transport (7) aménagé pour un mouvement automatique à travers du milieu (2), le support de substances actives (1) étant mis en un mouvement automatique par le dispositif de transport (7).

2. Support de substances actives selon la revendication 1, **caractérisé en ce qu'**une pluralité de corps de support de substances actives (14) sont incorporés dans le tuyau textile (3, 3') au niveau de sites d'action (12) étant espacés les uns des autres.

3. Support de substances actives selon la revendication 1 ou 2, **caractérisé en ce que** le tuyau textile (3, 3') est tricoté, tissé, tressé, filé et/ou non-tissé.

4. Support de substances actives selon la revendication 3, **caractérisé en ce que** le tuyau textile (3, 3') est formé en matériau boyau naturel ou artificiel.

5. Support de substances actives selon au moins l'une des revendications précédentes, **caractérisé en ce que** les corps de support de substances actives (14) sont des pellets et/ou des billes (17) et/ou des corps de coton ou des corps en mousse, qui peuvent être amenés sous une forme sphérique ou cylindrique comprimée pendant le traitement d'enrobage textile.

6. Support de substances actives selon au moins l'une des revendications précédentes, **caractérisé en ce que** l'au moins un corps de support de substances actives (14) présente des pores (18).

7. Support de substances actives selon au moins l'une des revendications précédentes, **caractérisé en ce que** l'au moins un corps de support de substances actives (14) est un corps creux.

8. Support de substances actives selon au moins l'une des revendications précédentes, **caractérisé en ce que** l'au moins un corps de support de substances actives (14) présente au moins un matériau filtrant et/ou au moins un matériau support de catalyseur et/ou au moins une solution nutritive et/ou des nutriments solides et/ou des nutriments pâteux et/ou des produits animaux et/ou des excrétions d'animaux et/ou des déchets végétaux et/ou du matériau composté, et/ou est formé d'au moins une substance physiquement et/ou chimiquement réactive et/ou contient au moins une substance physiquement et/ou chimiquement réactive qui interagit et/ou réagit avec le milieu (2) environnant.

9. Support de substances actives selon la revendication 8, **caractérisé en ce que** des larves d'insectes et/ou des vers sont ou peuvent être incorporés dans le support de substances actives (1).

10. Support de substances actives selon la revendication 8, **caractérisé en ce que** le matériau filtrant et/ou le matériau support de catalyseur présente une structure en mousse poreuse.

11. Support de substances actives selon la revendication 8 ou 10, **caractérisé en ce que** le matériau filtrant et/ou le matériau support de catalyseur présente des pores compressibles et/ou relaxables.

12. Support de substances actives selon au moins l'une des revendications précédentes, **caractérisé en ce qu'**un noyau d'alourdissement (19) est prévu dans le volume interne du support de substances actives (1) ou que des corps d'alourdissement (6) sont incorporés dans le tuyau textile (3, 3') entre les corps de support de substances actives (14).

13. Support de substances actives selon au moins l'une des revendications précédentes, **caractérisé en ce que** la chaîne (4) ou la bande est enroulée en forme ondulée ou arquée autour d'un numéro de colonnes de guidage (5) arrangées à une distance l'une à côté de l'autre et à une distance l'une en face de l'autre.

14. Support de substances actives selon au moins l'une des revendications précédentes, **caractérisé en ce que** la chaîne (4) ou la bande est incorporée dans un tissu platiforme.
